# EUROPÄISCHE PATENTSCHRIFT

(11) **EP 2 620 892 B1**
(45) Veröffentlichungstag und Bekanntmachung des Hinweises auf die Patenterteilung: **10.07.2019**
(21) Anmeldenummer: 13150301.3
(22) Anmeldetag: 04.01.2013
(51) Int. Cl.: G06F 21/34, H04L 9/08, G06F 21/62

(54) **Verfahren zur Erzeugung eines Pseudonyms mit Hilfe eines ID-Tokens**
Method for generating a pseudonym with the help of an ID token
Procédé de création d'un pseudonyme à l'aide d'un jeton d'ID

(30) Priorität: 27.01.2012 DE 102012201209
(43) Veröffentlichungstag der Anmeldung: 31.07.2013
(60) Teilanmeldung: 19163137.3
(73) Patentinhaber: Bundesdruckerei GmbH, 10969 Berlin (DE)
(72) Erfinder: Kahlo, Christian, 07743 Jena (DE); Entschew, Enrico, 12435 Berlin (DE); Rüdiger, Mark, 15732 Eichwalde (DE); Sauer, Sascha, 07743 Jena (DE); Bruntsch, Christian, 07743 Jena (DE); Moszynski, Ivo, 10318 Berlin (DE)
(74) Vertreter: Richardt Patentanwälte PartG mbB

(56) Entgegenhaltungen:
- WO-A1-2005/032100
- WO-A1-2011/131715
- "Architektur elektronischer Personalausweis und elektroni-scher Aufenthaltstitel", , 27. Mai 2011 (2011-05-27), XP055059591, Bonn, Germany Gefunden im Internet: URL:https://www.bsi.bund.de/DE/Publikation en/TechnischeRichtlinien/tr03127/tr-03127. html [gefunden am 2013-04-15]
- "Advanced Security Mechanisms for Machine Readable Travel Documents", , 27. Oktober 2008 (2008-10-27), Seiten 1-99, XP055059564, Bonn, Germany Gefunden im Internet: URL:https://www.bsi.bund.de/DE/Publikation en/TechnischeRichtlinien/tr03110/index_htm .html [gefunden am 2013-04-15]
- "Technische Richtlinie eID-Server" In: "Technische Richtlinie eID-Server", 6. Dezember 2011 (2011-12-06), Bundesamt für Sicherheit in der Informationstechnik, Bonn, Germany, XP055059662, Seiten 1-101, * Seite 11 * * Seite 13 * * Seite 15 * * Seite 16 * * Seite 42 * * Seite 48 - Seite 73 * * Seite 82 *
- "http://de.wikipedia.org/w/index.php?title =Anonymisierung_und_Pseudonymisierung&oldi d=90797742", , 3. Juli 2011 (2011-07-03), XP055059836, Gefunden im Internet: URL:http://de.wikipedia.org/w/index.php?ti tle=Anonymisierung_und_Pseudonymisierung&o ldid=90797742 [gefunden am 2013-04-16]

## Beschreibung

Die Erfindung betrifft ein Verfahren zur Erzeugung eines Pseudonyms mit Hilfe eines ID-Tokens, ein Computerprogrammprodukt und ein Datenverarbeitungssystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Aus DE 10 2008 000 067 B4 ist ein Verfahren zum Lesen von Attributen aus einem ID-Token bekannt, bei dem ein ID-Provider-Computersystem über ein Netzwerk zumindest ein Attribut aus dem ID-Token ausliest, wobei es sich bei dem ID-Token zum Beispiel um ein Ausweisdokument handeln kann. Aus DE 10 2008 040 416 A1, DE 10 2009 001 959 A1, DE 10 2009 027 676, DE 10 2009 027 681 A1, DE 10 2009 027 682 A1, DE 10 2009 027 686 A1, DE 10 2009 027 723 A1, DE 10 2009 046 205 A1 und DE 10 2010 028 133 A1 sind Weiterbildungen und verschiedene Verwendungen dieses Verfahrens bekannt.

In DE 10 2011 084 728 und DE 10 2011 089 580.9, sind Verfahren zum Lesen von Attributen aus einem ID-Token unter Verwendung einer SAML-Request und einer SAML-Response offenbart.

Der elektronische Personalausweis der Bundesrepublik Deutschland (ePass) hat eine Pseudonym-Funktion, die auch als "Restricted Identifier" (RID) bezeichnet wird. Diese Pseudonym-Funktion ermöglicht ein anonymes Login auf Websites. Der ePass erzeugt eine pseudonyme Kartenkennung und übermittelt diese an die Website. Bei jedem weiteren Aufruf der Website wird die gleiche Kartenkennung übermittelt, sodass der Ausweisinhaber "wiedererkannt" wird. Diese Funktionen des elektronischen Personalausweises sind etwa in der Technischen Richtlinie TR-03127, Version 1.14, vom 27.5.2011 ("Architektur elektronischer Personalausweis und elektronischer Aufenthaltstitel") des Bundesamtes für Sicherheit in der Informationstechnik beschrieben.

Der Erfindung liegt demgegenüber die Aufgabe zugrunde, ein verbessertes Verfahren zur Erzeugung eines Pseudonyms zu schaffen, sowie ein entsprechendes Computerprogrammprodukt und ein Datenverarbeitungssystem.

Die der Erfindung jeweils zugrunde liegenden Aufgaben werden mit den Merkmalen der unabhängigen Patentansprüche gelöst. Ausführungsformen der Erfindung sind in den abhängigen Patentansprüchen angegeben.

Nach Ausführungsformen der Erfindung wird ein Verfahren zur Erzeugung eines Pseudonyms mit Hilfe eines ID-Tokens geschaffen, wobei der ID-Token einem Nutzer zugeordnet ist. Der ID-Token hat einen geschützten Speicherbereich zur Speicherung eines privaten Schlüssels eines ersten asymmetrischen kryptografischen Schlüsselpaars, welches dem ID-Token zugeordnet ist und dessen Identität ausmacht.

Das zu erzeugende Pseudonym des Nutzers soll einem bestimmten Dienst-Computersystem einer Menge von Dienst-Computersystemen zugeordnet sein, aus denen der Nutzer eine Auswahl treffen kann. Die Dienst-Computersysteme der Menge sind beispielsweise bei einem ID-Provider-Computersystem registriert. Je nach Ausführungsform kann eine solche Registrierung aber auch entfallen. In letzterem Fall kann es sich bei der Menge von Dienst-Computersystemen um beliebige Computersysteme handeln, mit denen der Nutzer von seinem Nutzer-Computersystem aus eine Session aufbauen kann.

Nach Ausführungsformen der Erfindung ruft der Nutzer zunächst eine Internetseite eines ausgewählten Dienst-Computersystems auf, und zwar mit Hilfe des Internetbrowsers seines Nutzer-Computersystems über ein Netzwerk, wie zum Beispiel ein öffentliches Netzwerk, insbesondere das Internet. Daraufhin wird durch das Dienst-Computersystem eine Anforderung zur Eingabe eines Pseudonyms des Nutzers generiert, beispielsweise für ein Login des Nutzers auf dem Dienst-Computersystem oder zur Wiedererkennung des Nutzers.

Beispielsweise kann es sich bei dem ausgewählten Dienst-Computersystem um einen Onlineshop handeln, in dem unter dem Pseudonym Informationen zu dem zurückliegenden Verhalten des Nutzers gespeichert sind, um dem Nutzer nach dessen Wiedererkennung daraus abgeleitete Vorschläge oder Angebote für seinen nachfolgenden Einkauf zu unterbreiten. Insbesondere kann es sich hierbei um Produkte oder Dienstleistungen handeln, die online geliefert oder erbracht werden, insbesondere das Streaming oder Herunterladen von Dateien. Die Bezahlung erfolgt vorzugsweise durch ein anonymes Prepaid-Verfahren, um die Identität des Nutzers nicht durch den Bezahlvorgang offenlegen zu müssen.

Ferner kann es sich bei dem Dienst-Computersystem um ein soziales Netzwerk handeln, in dem der Nutzer unter seinem Pseudonym registriert ist. Insbesondere ermöglicht es die Erfindung, dass der Nutzer an verschiedenen sozialen Netzwerken unter verschiedenen Pseudonymen teilnimmt.

In einer weiteren Ausführungsform bietet das Dienst-Computersystem einen email-Dienst, für den der Nutzer unter seinem Pseudonym registriert ist. Der Nutzer kann mit diesem email-Dienst nach dem Einloggen auf dem Dienst-Computersystem unter seinem Pseudonym Emails verschicken. Beispielsweise kann durch das Pseudonym die Email-Adresse des Nutzers für diesen email-Dienst ganz oder teilweise definiert sein.

Nach Ausführungsformen der Erfindung wird beispielsweise durch die o.g. Dienst-Computersysteme und ggf. weitere Dienst-Computersysteme, die ähnliche oder andere Dienste anbieten und über das Netzwerk zur Verfügung stellen, die Menge der Dienst-Computersysteme gebildet.

Die Anforderung des vom Nutzer aus dieser Menge ausgewählten Dienst-Computersystems zur Eingabe des Pseudonyms des Nutzers wird von dem betreffenden Dienst-Computersystem an das ID-Provider-Computersystem übertragen, und zwar über das Netzwerk. Diese Übertragung kann mit oder ohne Zwischenschaltung des Nutzer-Computersystems erfolgen.

Anschließend muss sich der Nutzer gegenüber seinem ID-Token authentifizieren, beispielsweise durch Eingabe seines Passworts, seiner PIN und/oder durch eine biometrische Authentifizierung. Ferner muss sich auch das ID-Provider-Computersystem gegenüber dem ID-Token authentifizieren, was mit Hilfe eines Zertifikats über das Netzwerk erfolgt.
In dem Zertifikat ist das Recht für einen Lesezugriff des ID-Provider-Computersystems auf den ID-Token spezifiziert, und zwar lediglich zum Lesen eines ID-Token-Pseudonyms. Ferner gehört zu dem Zertifikat ein öffentlicher Schlüssel eines zweiten asymmetrischen kryptografischen Schlüsselpaars, durch welches die Identität des ID-Provider-Computersystems gegeben ist. Der private Schlüssel des zweiten Schlüsselpaars wird in einem geschützten Speicherbereich des ID-Provider-Computersystems gespeichert.

Nach erfolgreicher Authentifizierung des Nutzers und des ID-Provider-Computersystems gegenüber dem Token und der erfolgreichen Prüfung des Zugriffsrechts des ID-Provider-Computersystems zum Lesen des ID-Token-Pseudonyms durch den ID-Token, wird durch den ID-Token das ID-Token-Pseudonym generiert, und zwar durch Ableitung aus dem privaten Schlüssel des ersten kryptografischen Schlüsselpaars und des öffentlichen Schlüssels des zweiten kryptografischen Schlüsselpaars, beispielsweise mit Hilfe des Elliptic Curve Diffie Hellman-Verfahrens.

Die Authentifizierung des Nutzers kann - je nach Ausführungsform - zu unterschiedlichen Zeitpunkten erfolgen. Beispielsweise kann der ID-Token so ausgebildet sein, dass sich zunächst der Nutzer authentifizieren muss, bevor eine Kommunikation mit dem ID-Token über dessen Schnittstelle überhaupt möglich ist, wie das bei dem elektronischen Personalausweis der Bundesrepublik Deutschland der Fall ist. Beispielsweise muss also erst die Authentifizierung des Nutzers erfolgen, bevor das Zertifikat (Berechtigungszertifikat) übertragen wird und bevor beispielsweise auch die sog. Terminal Authentication (Echtheit des ID-Providers), die Chip Authentication (Echtheit des Dokuments) sowie die Übertragung des Schlüssels, z.B. für eine Ende-zu-Ende-Verschlüsselung, erfolgen kann. In jedem Fall muss aber die Authentifizierung des Nutzers vor dem Übertragen des Pseudonyms von dem ID-Token an das ID-Provider-Computersystem erfolgen - der Zeitpunkt hierfür kann je nach Ausführungsform unterschiedlich gewählt werden.

Zum Auslesen des ID-Token-Pseudonyms wird ein Kanal mit Ende-zu-Ende-Verschlüsselung zwischen dem ID-Token und dem ID-Provider-Computersystem aufgebaut. Über diesen Kanal liest dann das ID-Provider-Computersystem das ID-Token-Pseudonym aus.

Das ID-Provider-Computersystem prüft dann, ob das ID-Token-Pseudonym valide ist. Hierzu greift das ID-Provider-Computersystem auf eine Sperrliste zu, in der die ID-Token-Pseudonyme gesperrter ID-Token gespeichert sind. Eine solche Sperrliste beinhaltet die ID-Token-Pseudonyme von ID-Token, deren Gültigkeitsdauer überschritten ist und von solchen, die als verloren oder gestohlen gemeldet worden sind. Die Sperrliste wird beispielsweise von einer sogenannten Certification Authority (CA) geführt, welche gleichzeitig auch Betreiberin des ID-Provider-Computersystems sein kann.

Wenn das ID-Token-Pseudonym nicht auf der Sperrliste beinhaltet ist, so leitet das ID-Provider-Computersystem anschließend ein für das ausgewählte Dienst-Computersystem spezifisches Pseudonym des Nutzers aus dem ID-Token-Pseudonym des Nutzers ab. Dies kann mit Hilfe einer kryptografischen Funktion erfolgen, die aus dem ID-Token-Pseudonym als Eingangsgröße und einer für das ausgewählte Dienst-Computersystem spezifischen weiteren Eingangsgröße das Pseudonym ableitet, so dass sich je nach ausgewähltem Dienst-Computersystem aus demselben ID-Token-Pseudonym ein bestimmtes abgeleitetes Pseudonym ergibt. Mit anderen Worten ist die kryptografische Funktion also spezifisch für das ausgewählte Dienst-Computersystem, da sie je nach dem ausgewählten Dienst-Computersystem ein anderes Pseudonym ableitet.

Dies kann so erfolgen, dass für jedes der Dienst-Computersysteme eine andere kryptografische Funktion verwendet wird, oder dass für alle Dienst-Computersysteme dieselbe kryptografische Funktion für die Ableitung verwendet wird, wobei in diese kryptografische Funktion dann eine für das ausgewählte Dienst-Computersystem spezifische Kennung eingeht.

Dieses abgeleitete Pseudonym wird dann von dem ID-Provider-Computersystem signiert und an das ausgewählte Dienst-Computersystem übertragen. Das Dienst-Computersystem kann dann die Validität der Signatur prüfen und das empfangene Pseudonym für einen Log-in des Nutzers und/oder eine Wiedererkennung des Nutzers verwenden.

Ausführungsformen der Erfindung sind besonders vorteilhaft, da die Dienst-Computersysteme nicht jeweils eigene Zertifikate haben müssen, sondern das ein einziges Zertifikat, nämlich das des ID-Provider-Computersystems ausreichend ist. Der mit der Erzeugung und der zur Verfügungstellung von Zertifikaten für die Dienst-Computersysteme erforderliche informationstechnische, logistische und finanzielle Aufwand kann daher entsprechend reduziert werden.

Von weiterem besonderem Vorteil ist, dass der Datenverarbeitungsaufwand für die Prüfung der Validität stark reduziert werden kann, da die Sperrliste auf der Ebene der ID-Token-Pseudonyme erstellt und geprüft wird und nicht auf der Ebene der abgeleiteten Pseudonyme. Dies ist insbesondere dann von ganz besonderem Vorteil, wenn eine große Anzahl von ID-Token im Umlauf befindlich sind und eine große Anzahl von Nutzern diese gegenüber einer großen Anzahl von Dienst-Computersystemen nutzen. Die Sperrliste kann dann nämlich pro ID-Token nur maximal einen Eintrag beinhalten und nicht etwa einen Eintrag pro ID-Token pro Dienst-Computersystem. Dies verringert den Ressourcenaufwand bzw. die Latenzzeit für die Prüfung der Validität ganz erheblich.

Nach Ausführungsformen der Erfindung ist jedem der Dienst-Computersysteme eine separate Trapdoor-Funktion zugeordnet. Das ID-Provider-Computersystem wählt zur Ableitung des Pseudonyms die dem ausgewählten Dienst-Computersystem zugeordnete Trapdoor-Funktion und leitet dann mit Hilfe dieser Trapdoor-Funktion das Pseudonym ab. Beispielsweise kann die Trapdoor-Funktion als Hashfunktion ausgebildet sein.

Eine weitere Möglichkeit ist, dass zu jedem der Dienst-Computersysteme ein geheimer kryptografischer Schlüssel von dem ID-Provider-Computersystem gespeichert wird. In diesem Fall greift das ID-Provider-Computersystem auf den dem ausgewählten Dienst-Computersystem zugeordneten kryptografischen Schlüssel zu, um mit Hilfe zum Beispiel einer symmetrischen Verschlüsselung aus dem ID-Token-Pseudonym und dem kryptografischen Schlüssel das Pseudonym des Nutzers für das ausgewählte Dienst-Computersystem abzuleiten.

Ferner kann die Ableitung des Pseudonyms aus dem ID-Token-Pseudonym mit Hilfe eines Elliptic Curve Diffie Hellman-Verfahrens erfolgen, wobei das ID-Token-Pseudonym hierbei als privater Schlüssel dient.

Nach einer weiteren Ausführungsform der Erfindung dient eine Kennung des ausgewählten Dienst-Computersystems als Eingabeparameter für die kryptografische Funktion, wie zum Beispiel ein Uniform Ressource Locator (URL) der ausgewählten Internetseite oder ein anderer öffentlicher oder nichtöffentlicher Identifikator des Dienst-Computersystems, der beispielsweise anlässlich der Registrierung des Dienst-Computersystems durch das ID-Provider-Computersystem vergeben wird oder der zusammen mit der Anforderung von dem ausgewählten Dienst-Computersystem an das ID-Provider-Computersystem übertragen wird.

Nach einer Ausführungsform der Erfindung wird das Pseudonym durch ein HMAC-Verfahren berechnet, wobei das ID-Token-Pseudonym hierbei als geheimer Schlüssel dient. Das HMAC-Verfahren kann beispielsweise entsprechend RFC2104, Network Working Group, HMAC: Keyed-Hashing for Message Authentication, Februar 1997 implementiert werden. Besonders vorteilhaft ist hierbei, wenn zum Beispiel die URL des ausgewählten Dienst-Computersystems als Kennung in die Erzeugung des HMAC eingeht, da dann eine zuvorige Registrierung des Dienst-Computersystems bei dem ID-Provider-Computersystem nicht zwangsläufig erfolgen muss.

Nach einer Ausführungsform der Erfindung wird die Anforderung des Dienst-Computersystems als SAML-Request übertragen. Beispielsweise kann der SAML-Request einen identifikator, d.h. eine sog. Session-ID, der aufgrund des Aufrufs der Internetseite aufgebauten Session beinhalten. Das ID-Provider-Computersystem generiert aufgrund des SAML-Requests eine entsprechende SAML-Response, die neben dem abgeleiteten Pseudonym diesen identifikator der Session beinhaltet, sodass das ausgewählte Dienst-Computersystem die SAML-Response anhand der Session-ID der Session und damit dem Nutzer zuordnen kann.

In einem weiteren Aspekt betrifft die Erfindung ein Computerprogrammprodukt zur Ausführung eines erfindungsgemäßen Verfahrens.

In einem weiteren Aspekt betrifft die Erfindung ein Datenverarbeitungssystem mit einem ID-Provider-Computersystem.

Nach Ausführungsformen der Erfindung beinhaltet das ID-Provider-Computersystem Mittel zum Empfang einer Anforderung von einem ausgewählten Dienst-Computersystem einer Menge von Dienst-Computersystemen über ein Netzwerk, Mittel zur Authentifizierung des ID-Provider-Computersystems gegenüber einem ID-Token eines Nutzers über das Netzwerk mit einem Zertifikat, welches einen öffentlichen Schlüssel eines zweiten asymmetrischen kryptografischen Schlüsselpaars beinhaltet und in dem eine Leseberechtigung des ID-Provider-Computersystems für einen Lesezugriff zum Lesen eines ID-Token-Pseudonyms definiert ist, wobei die Mittel zur Authentifizierung zur Übertragung des Zertifikats an den ID-Token über das Netzwerk ausgebildet sind, um die Erzeugung eines ID-Token-Pseudonyms durch den ID-Token mittels einer kryptografische Ableitung des ID-Token-Pseudonyms aus dem privaten Schlüssel und dem öffentlichen Schlüssel zu ermöglichen, Mittel zur Durchführung eines Lesezugriffs auf das ID-Token-Pseudonym des ID-Tokens über das Netzwerk mit Ende-zu-Ende-Verschlüsselung, Mittel zur Prüfung der Validität des ID-Token-Pseudonyms, Mittel zur Ableitung eines dem ausgewählten Dienst-Computersystem zugeordneten Pseudonyms des Nutzers aus dem ID-Token-Pseudonym des Nutzers mittels einer für das ausgewählte Dienst-Computersystem spezifischen kryptografischen Funktion, Mittel zur Signierung des abgeleiteten Pseudonyms durch das ID-Provider-Computersystem, und Mittel zur Übertragung des signierten Pseudonyms von dem ID-Provider-Computersystem an das ausgewählte Dienst-Computersystem über das Netzwerk.

Nach Ausführungsformen der Erfindung beinhaltet das Datenverarbeitungssystem ferner einen oder mehrere der ID-Token und/oder ein oder mehrere der Dienst-Computersysteme und/oder das Nutzer-Computersystem.

Nach Ausführungsformen der Erfindung kann das Zertifikat des ID-Provider-Computersystems neben der Berechtigung zum Auslesen des ID-Token-Pseudonyms noch weitere Leserechte beinhalten, wie zum Beispiel zum Lesen des in dem ID-Token des Nutzers gespeicherten Geburtsdatums des Nutzers, um seitens des Dienst-Computersystems eine Überprüfung zu ermöglichen, ob der Nutzer das für die Erbringung des gewünschten Dienstes erforderliche Alter hat. Alternativ oder zusätzlich für eine solche Altersverifikation kann das Zertifikat ein Recht des ID-Provider-Computersystems zum Beispiel für eine Gemeindekennzahlverifikation beinhalten. Somit können auf kostengünstige Weise zum Beispiel online-Wahlverfahren realisiert werden.

Von weiterem besonderem Vorteil ist, dass durch die Dienst-Computersysteme kein Profil des Nutzerverhaltens erstellt werden kann, welches über das Nutzerverhalten gegenüber einzelnen der Dienst-Computersysteme hinausgeht, da aus den abgeleiteten Pseudonymen eines Nutzers nicht auf dessen Identität rückgeschlossen werden kann.

Unter einem "ID-Token" wird hier insbesondere ein tragbares elektronisches Gerät verstanden, welches zumindest einen Datenspeicher zur Speicherung des zumindest einen Attributs und eine Kommunikations-Schnittstelle zum Auslesen des Attributs aufweist. Vorzugsweise hat der ID-Token einen gesicherten Speicherbereich zur Speicherung des zumindest einen Attributs, um zu verhindern, dass das in dem Speicherbereich gespeicherte Attribut in unerlaubter Weise verändert oder ohne die dafür erforderliche Berechtigung ausgelesen wird.

Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Banknoten, Bankkarten und Kreditkarten, Frachtbriefe oder sonstige Berechtigungsnachweise, in die ein Datenspeicher zur Speicherung des zumindest einen Attributs integriert ist.

Nach Ausführungsformen der Erfindung ruft der Nutzer, der sich in Besitz des ID-Tokens befindet, mit Hilfe eines Internetbrowsers seines Nutzer-Computersystems eine Internetseite eines Dienst-Computersystems auf, wobei die Internetseite zur Eingabe einer Auswahl eines Dienstes ausgebildet ist.

Unter einem "Nutzer-Computersystem" wird hier ein Computersystem verstanden, auf welches der Nutzer Zugriff hat. Hierbei kann es sich zum Beispiel um einen Personal Computer (PC), ein Tablet PC oder ein Mobilfunkgerät, insbesondere ein Smart Phone, mit einem üblichen Internetbrowser, wie zum Beispiel Microsoft Internet Explorer, Safari, Google Chrome, Firefox handeln. Das Nutzer-Computersystem hat eine Schnittstelle zur Verbindung mit dem Netzwerk, wobei es sich bei dem Netzwerk um ein privates oder öffentliches Netzwerk handeln kann, insbesondere das Internet.

Unter einem "Dienst-Computersystem" wird hier ein Computersystem verstanden, welches über eine Netzwerk-Schnittstelle zur Verbindung mit dem Netzwerk verfügt, sodass mit Hilfe des Internetbrowsers des Nutzer-Computersystems und anderer Nutzer-Computersysteme auf von dem Dienst-Computersystem gespeicherte oder generierte Internetseiten zugegriffen werden kann. Insbesondere kann es sich bei dem Dienst-Computersystem um einen Internetserver zur Verfügungstellung eines Online-Dienstes handeln.

Mit Hilfe des Internetbrowsers kann der Nutzer eine Internetseite des Dienst-Computersystems auswählen und auf das Nutzer-Computersystem laden. Der Nutzer kann daraufhin mit Hilfe des Internetbrowsers einen auf der Internetseite angebotenen Dienst auswählen und die entsprechende Auswahlentscheidung über den Internetbrowser eingeben, sodass diese Eingabe an das Dienst-Computersystem übertragen wird. Insbesondere erfolgt dies im Rahmen einer sogenannten Session, die zwischen dem Dienst-Computersystem und dem Internetbrowser für den Zugriff auf die Internetseite aufgebaut wird.

Nach Ausführungsformen der Erfindung erzeugt das Dienst-Computersystem einen SAML-Request. Das Dienst-Computersystem fungiert dabei also als SAML-Requester (vgl. Security Assertion Markup Language (SAML) V2.0 Technical Overview, OASIS, Committee Draft 02, 25. März 2008).

Unter einem "ID-Provider-Computersystem" wird hier ein Computersystem verstanden, welches dazu ausgebildet ist, das ID-Token-Pseudonym und - je nach Ausführungsform - zumindest ein Attribut aus dem ID-Token auszulesen.

Aufgrund des SAML-Request führt das ID-Provider-Computersystem einen Lesezugriff auf den ID-Token durch, um die das ID-Token-Pseudonym und ggf. die gemäß der Attributspezifizierung erforderlichen ein oder mehreren Attribute aus dem ID-Token auszulesen. Hierzu ist es zunächst erforderlich, dass sich sowohl das ID-Provider-Computersystem als auch der Nutzer gegenüber dem ID-Token authentifizieren, wie es an sich aus DE 10 2008 000 067 bekannt ist.

Das ID-Provider-Computersystem erzeugt dann eine SAML-Response, fungiert also als SAML-Responder. Die SAML-Response beinhaltet zumindest das abgeleitete Pseudonym und ggf. ein aus dem ID-Token ausgelesenes Attribut und ist signiert, sodass die SAML-Response über das Netzwerk übertragen werden kann, ohne dass ein Dritter die SAML-Response unentdeckt manipulieren könnte. Vorzugsweise beinhaltet die SAML-Response auch die Session-ID, welche das ID-Provider-Computersystem mit dem SAML-Request erhalten hat.

Das Dienst-Computersystem ordnet die SAML-Response mit Hilfe der in der SAML-Response beinhalteten Session-ID der zuvor getroffenen Auswahl des Dienstes, d.h. des Aufrufs der Internetseite durch den Nutzer zu. Dies ist besonders vorteilhaft, weil auf diese Art und Weise Auswahlen von Diensten des Dienst-Computersystems verschiedener Nutzer gleichzeitig verarbeitet werden können, weil aufgrund der Session-ID jeweils eine Zuordnung zwischen SAML-Request, SAML-Response und der eingegebenen Auswahl des Dienstes bzw. der Internetsession gegeben ist.

Das Dienst-Computersystem kann dann anhand der SAML-Response, welche das abgeleitete Pseudonym beinhaltet, prüfen, ob ein vorgegebenes Kriterium für die Erbringung des ausgewählten Dienstes für den Nutzer erfüllt ist, beispielsweise ob der Nutzer zu einer autorisierten oder registrierten Nutzergruppe gehört oder ob der Nutzer über ein ausreichendes Guthaben verfügt. Wenn das entsprechende Kriterium erfüllt ist, kann dann das Dienst-Computersystem den ausgewählten Dienst erbringen.

Unter einem "ID-Token-Pseudonym" wird hier ein Pseudonym verstanden, welches einem ID-Token und dessen Nutzer zugeordnet ist, und welches in dem ID-Token zumindest temporär gespeichert wird, um ein Auslesen aus dem ID-Token durch ein hierzu autorisiertes Terminal, insbesondere ein ID-Provider-Computersystem, zu ermöglichen. Insbesondere kann es sich bei dem ID-Token-Pseudonym um den Restricted Identifier des ePass handeln.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Datenverarbeitungssystems,
- Figur 2: ein UML-Diagramm einer Ausführungsform eines erfindungsgemäßen Verfahrens.

Elemente der nachfolgenden Ausführungsformen, die einander entsprechen oder gleichen, werden jeweils mit denselben Bezugszeichen gekennzeichnet.

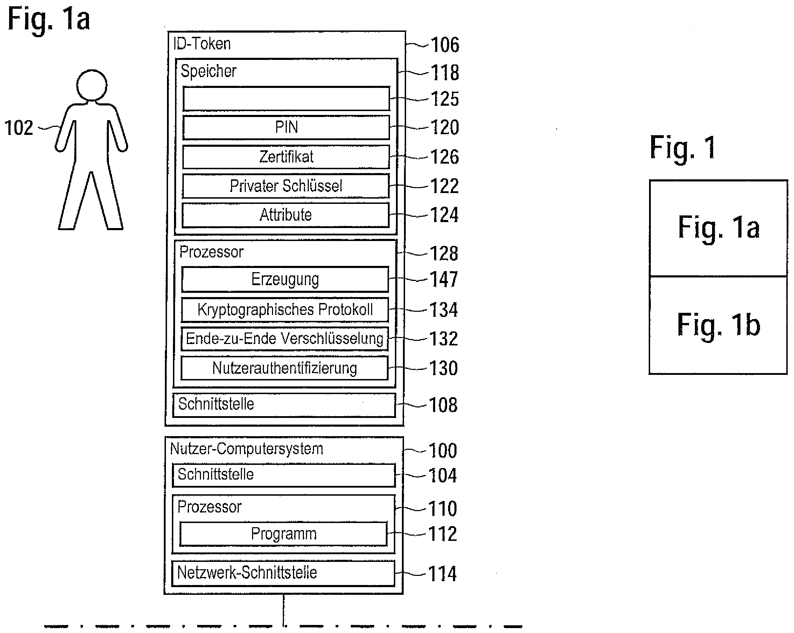

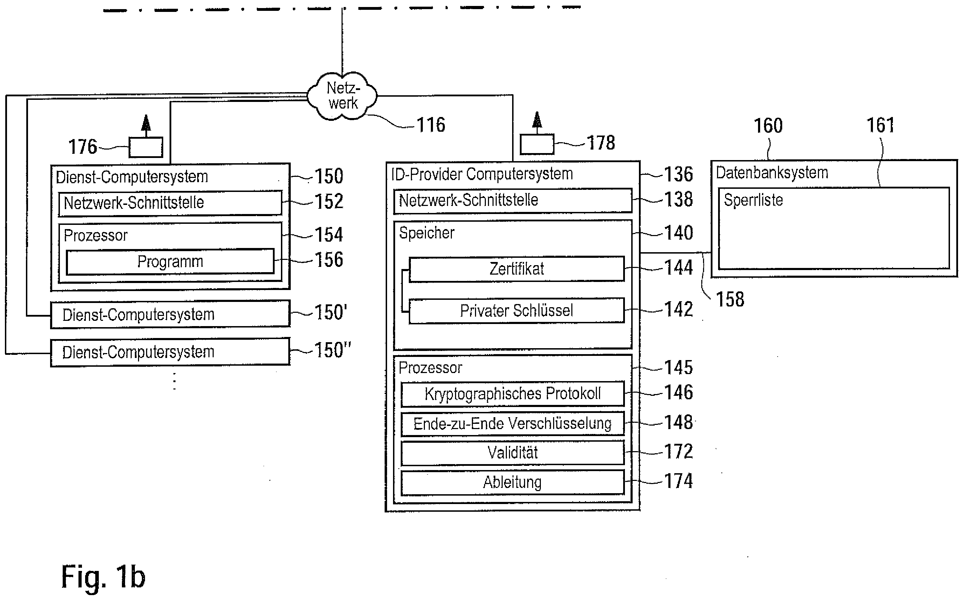

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln. Das Nutzer-Computersystem 100 hat eine Schnittstelle 104 zur Kommunikation mit einem ID-Token 106, der eine entsprechende Schnittstelle 108 aufweist.

Das Nutzer-Computersystem 100 hat zumindest einen Prozessor 110 zur Ausführung von Programminstruktionen 112 sowie eine Netzwerk-Schnittstelle 114 zur Kommunikation über ein Netzwerk 116. Bei dem Netzwerk kann es sich um ein Computernetzwerk, wie zum Beispiel das Internet, handeln.

Der ID-Token 106 hat einen elektronischen Speicher 118 mit geschützten Speicherbereichen 120, 122, 124 und 125. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine Kennung, insbesondere eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die den ID-Token selbst betreffen, wie zum Beispiel die Institution, die den ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der geschützte Speicherbereich 125 dient zur Speicherung eines ID-Token-Pseudonyms nachdem dieses durch Ausführung von Programminstruktionen 147 erzeugt worden ist. Die Speicherung des ID-Token-Pseudonyms in dem geschützten Speicherbereich 125 erfolgt dabei vorzugsweise nur temporär. Beispielsweise wird das ID-Token-Pseudonym aufgrund eines externen Lesezugriffs automatisch aus dem geschützten Speicherbereich 125 gelöscht.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Der ID-Token 106 hat einen Prozessor 128. Der Prozessor 128 dient zur Ausführung von Programminstruktionen 130, 132, 134 und 147. Die Programminstruktionen 130 dienen zur Nutzerauthentifizierung, d.h. zur Authentifizierung des Nutzers 102 gegenüber dem ID-Token.

Bei einer Ausführungsform mit PIN gibt der Nutzer 102 seine PIN zu seiner Authentifizierung in den ID-Token 106 ein, beispielsweise über das Nutzer-Computersystem 100. Durch Ausführung der Programminstruktionen 130 wird dann auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat der ID-Token 106 hierzu einen Fingerabdrucksensor oder ein Fingerabdrucksensor ist an das Nutzer-Computersystem 100 angeschlossen. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der den ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute bzw. des in dem geschützten Speicherbereich 125 gespeicherten ID-Token-Pseudonyms nach. Die Authentifizierung kann auch gegenseitig sein, d.h. auch der ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 und/oder 125 ausgelesenen Daten. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird.

Alternativ zu der in der Figur 1 dargestellten Ausführungsform kann das Nutzer-Computersystem 100 mit seiner Schnittstelle 104 nicht unmittelbar mit der Schnittstelle 108 kommunizieren, sondern über ein an die Schnittstelle 104 angeschlossenes Lesegerät für den ID-Token 106. Über dieses Lesegerät, wie zum Beispiel einen so genannten Klasse 2-Chipkarten-Terminal, kann auch die Eingabe der PIN erfolgen.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert ist. Auch bei diesem Zertifikat kann es sich beispielsweise um ein Zertifikat nach einem PKI-Standard, wie zum Beispiel X.509 handeln. Das Zertifikat 144 beinhaltet einen öffentlichen Schlüssel, der zusammen mit dem privater Schlüssel 142 ein asymmetrisches kryptographisches Schlüsselpaar bildet, welches die Identität des ID-Provider-Computersystems 136 definiert.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Erbringung einer Online-Dienstleistung, ausgebildet sein. Das Dienst-Computersystem 150 kann beispielsweise als Online-Warenhaus oder soziales Netzwerk ausgebildet sein. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert.

Durch die Programminstruktionen 112 wird auf dem Nutzer-Computersystem 100 ein Internetbrowser zur Verfügung gestellt. Mit Hilfe des Internetbrowsers kann der Nutzer 102 eine durch das Dienst-Computersystem 150 generierte Internetseite aufrufen, und zwar über das Netzwerk 116. Neben dem Dienst-Computersystem 150 können weitere Dienst-Computersysteme 150', 150" an das Netzwerk 116 angeschlossen sein, von denen der Nutzer in analoger Art und Weise jeweils auch eine Internetseite aufrufen kann, um eines dieser Dienst-Computersysteme hierdurch auszuwählen.

In dem Zertifikat 144 des ID-Provider-Computersystems 136 ist eine Leseberechtigung des ID-Provider-Computersystems 136 für einen Lesezugriff auf den ID-Token 106 spezifiziert, und zwar zum Lesen des ID-Token-Pseudonyms aus dem geschützten Speicherbereich 125 des ID-Tokens 106. Dieses Zertifikat 144 dient also zum Nachweis der Leseberechtigung für das ID-Provider-Computersystem 136, und zwar unabhängig davon, für welches der Dienst-Computersysteme 150, 150', 150",... der Lesezugriff zum Lesen des ID-Token-Pseudonyms durchgeführt werden soll.

Für die Prüfung der Validität eines ausgelesenen ID-Token-Pseudonyms ist das ID-Provider-Computersystem 136 zum Beispiel über eine lokale Verbindung 158 mit einem Datenbanksystem 160 zum Beispiel einer sogenannten Certification Authority (CA) verbunden. In dem Datenbanksystem 160 wird eine Sperrliste 161 gespeichert, in der ID-Token-Pseudonyme von ID-Token gespeichert sind, welche als verloren oder gestohlen gemeldet worden sind oder deren Gültigkeitsdauer abgelaufen ist.

Das Datenbanksystem 160 und das ID-Provider-Computersystem 136 können innerhalb desselben Trust-Centers befindlich sein, um die Lokalverbindung 158 zu schützen. Alternativ kann die Sperrliste 161 auch zum Beispiel in dem Speicher 140 des ID-Provider-Computersystems 136 gespeichert sein. Zur Prüfung der Validität eines aus dem ID-Token 106 ausgelesenen ID-Token-Pseudonyms wird durch Ausführung von Programminstruktionen 172 durch den Prozessor 145 eine Anfrage generiert, welche das ID-Token-Pseudonym beinhaltet. Diese Anfrage wird von dem ID-Provider-Computersystem 136 über die lokale Verbindung 158 an das Datenbanksystem 160 gesendet. Das Datenbanksystem 160 prüft daraufhin, ob das mit der Anfrage empfangene ID-Token-Pseudonym in der Sperrliste 161 beinhaltet ist. Wenn dies der Fall ist, so signalisiert das Datenbanksystem 160 als Antwort auf die Anforderung an das ID-Provider-Computersystem 136 über die lokale Verbindung 158, dass das ID-Token-Pseudonym nicht valide ist. Im gegenteiligen Fall signalisiert das Datenbanksystem 160 die Validität des ID-Token-Pseudonyms über die lokale Verbindung 158 an das ID-Provider-Computersystem 136.

Je nach Ausführungsform kann dieser Vorgang auch innerhalb des ID-Provider-Computersystems 136 ablaufen.

Das ID-Provider-Computersystem 136 hat ferner Programminstruktionen 174 zur Ableitung eines Pseudonyms für den Nutzer aus seinem ID-Token-Pseudonym, wobei dieses abgeleitete Pseudonym einem bestimmten Dienst-Computersystem zugeordnet ist. Mit anderen Worten dient ein abgeleitetes Pseudonym ausschließlich zur Verwendung gegenüber einem bestimmten von dem Nutzer ausgewählten der Dienst-Computersysteme.

Hierzu wird durch die Programminstruktionen 174 eine für die Dienst-Computersysteme 150, 150', 150", ... jeweils spezifische kryptografische Funktion implementiert, das heißt eine kryptografische Funktion in die neben dem ID-Token-Pseudonym die Auswahl eines bestimmten der Dienst-Computersysteme durch den Nutzer 102 eingeht.

Dies kann so erfolgen, dass durch die Programminstruktionen 174 für jedes der Dienst-Computersysteme eine eigene Einwegfunktion implementiert wird, wobei es sich bei den Einwegfunktionen um Hashfunktionen oder Trapdoor-Funktionen handeln kann.

Gemäß einer weiteren Ausführungsform werden durch das ID-Provider-Computersystem 136 verschiedene kryptografische Schlüssel für die Dienst-Computersysteme gespeichert, wobei jedem der Dienst-Computersysteme genau einer der kryptografischen Schlüssel zugeordnet ist. Durch Ausführung der Programminstruktionen 174 wird zur Ableitung des Pseudonyms auf den kryptografischen Schlüssel zugegriffen, welcher dem von dem Nutzer ausgewählten Dienst-Computersystem zugeordnet ist, um mit Hilfe dieses kryptografischen Schlüssels aus dem ID-Token-Pseudonym durch Durchführung einer kryptografischen Operation ein für das ausgewählte Dienst-Computersystem spezifisches Pseudonym abzuleiten.

Nach einer weiteren Ausführungsform wird durch die Programminstruktionen 174 ein Elliptic Curve Diffie Hellman-Verfahren implementiert, wie es an sich aus dem Stand der Technik bekannt ist. Gemäß dieser Ausführungsform dient das ID-Token-Pseudonym als geheimer Schlüssel zur Durchführung des EC-DH-Verfahrens seitens des ID-Provider-Computersystems 136. Als öffentlicher Schlüssel für die Durchführung des EC-DH-Verfahrens wird beispielsweise ein öffentlicher Schlüssel des ausgewählten Dienst-Computersystems verwendet. Entsprechend kann von dem ausgewählten Dienst-Computersystem das Pseudonym abgeleitet werden, indem der private Schlüssel des ausgewählten Dienst-Computersystems und der öffentliche Schlüssel des ID-Provider-Computersystems 136 hierfür verwendet wird. Dies hat den besonderen Vorteil, dass das abgeleitete Pseudonym nicht über das Netzwerk 116 übertragen werden muss, sondern lediglich öffentliche Domainparameter zwischen dem ausgewählten Dienst-Computersystem 150 und dem ID-Provider-Computersystem 136 kommuniziert werden.

Gemäß einer weiteren Ausführungsform wird durch die Programminstruktionen 174 ein Verfahren zur Berechnung eines HMAC implementiert, wie es an sich aus dem Stand der Technik bekannt ist. Gemäß dieser Ausführungsform wird das ID-Token-Pseudonym als geheimer Schlüssel zur Erzeugung eines HMAC einer Kennung des ausgewählten Dienst-Computersystems verwendet. Dieser HMAC bildet dann das abgeleitete Pseudonym.

Bei der Kennung des ausgewählten Dienst-Computersystems kann es sich zum Beispiel um einen Identifikator des Dienst-Computersystems handeln, der zum Beispiel anlässlich einer Registrierung des Dienst-Computersystems durch das ID-Provider-Computersystem 136 vergeben wird. Besonders bevorzugt handelt es sich bei der Kennung um die URL zum Beispiel der von dem Nutzer 102 aufgerufenen Internetseite des ausgewählten Dienst-Computersystems.

Beispielsweise wird das abgeleitete Pseudonym RID' für ein ausgewähltes Dienst-Computersystem aus dem ID-Token-Pseudonym RID durch eine Hash-Signatur von RID berechnet, wobei ein Hashwert der Kennung des Dienstanbieters zur Erzeugung der Hash-Signatur verwendet wird:

### RID'=Hashsignatur (RID, HASH(Kennung))

Gemäß einer Ausführungsform kann dies durch Verwendung einer URL des Dienst-Computersystems mit Hilfe von SHA-256 als Hashverfahren H erfolgen:

### RID'=HMAC-SHA256 (RID, H-SHA256(URL)).

Hierdurch erhält man je nach URL des ausgewählten Dienst-Computersystems jeweils ein für das ausgewählte Dienst-Computersystem spezifisches abgeleitetes Pseudonym RID'.

Im Betrieb wird beispielsweise wie folgt vorgegangen:
Mit Hilfe des Internetbrowsers des Nutzer-Computersystems 100 ruft der Nutzer 102 eine Internetseite eines der Dienst-Computersysteme, wie zum Beispiel des Dienst-Computersystems 150, auf, um dieses hierdurch auszuwählen. Das ausgewählte Dienst-Computersystem 150 erzeugt daraufhin eine Anforderung 176, die es über das Netzwerk 116 an das ID-Provider-Computersystem 136 sendet. Die Anforderung 176 kann die Session-ID der aufgrund des Aufrufs der Internetseite zwischen dem Internetbrowser des Nutzer-Computersystems 100 und dem Dienst-Computersystem 150 aufgebauten Session beinhalten sowie auch eine Kennung des Dienst-Computersystems 150, beispielsweise eine URL, insbesondere die URL der zuvor von dem Nutzer aufgerufenen Internetseite.

Die Anforderung 176 wird vorzugsweise durch das Dienst-Computersystem 150 signiert. Hierzu kann das Dienst-Computersystem 150 einen privaten Schlüssel speichern, der zu einem asymmetrischen kryptografischen Schlüsselpaar gehört, welcher das Dienst-Computersystem 150 identifiziert. Für die weiteren Dienst-Computersysteme 150', 150" kann es sich analog verhalten.

Zur Inanspruchnahme des ID-Provider-Computersystems 136 für die Erzeugung des Pseudonyms aufgrund der Anforderung 176 wird wie folgt vorgegangen:

### 1. Authentifizierung des Nutzers 102 gegenüber dem ID-Token 106.

Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder einen daran angeschlossenen Chipkarten-Terminal ein. Durch Ausführung der Programminstruktionen 130 prüft dann der ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.

### 2. Authentifizierung des ID-Provider-Computersystems 136 gegenüber dem ID-Token 106.

Hierzu wird eine Verbindung zwischen dem ID-Token 106 und dem ID-Provider-Computersystem 136 über das Nutzer-Computersystem 100 und das Netzwerk 116 hergestellt. Beispielsweise überträgt das ID-Provider-Computersystem 136 sein Zertifikat 144 über diese Verbindung an den ID-Token 106. Durch die Programminstruktionen 134 wird dann eine so genannte Challenge generiert, d.h. beispielsweise eine Zufallszahl.

Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung an das ID-Provider-Computersystem 136 gesendet. Das ID-Provider-Computersystem 136 entschlüsselt das Chiffrat mit Hilfe seines privaten Schlüssels 142 und erhält so die Zufallszahl.

Die Zufallszahl sendet das ID-Provider-Computersystem 136 über die Verbindung an den ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.

### 3. Erzeugung und Lesen des ID-Token-Pseudonyms

Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erzeugt der ID-Token 106 das ID-Token-Pseudonym und das ID-Provider-Computersystem 136 erhält eine Leseberechtigung zum Auslesen zumindest des ID-Token-Pseudonyms.

Durch Ausführung der Programminstruktionen 147 erzeugt der ID-Token 106 aus dem privaten Schlüssel, der in dem Speicherbereich 122 gespeichert ist, sowie dem öffentlichen Schlüssel des Zertifikats 144 das ID-Token-Pseudonym und speichert dieses in dem Speicherbereich 125. Diese kryptografische Ableitung kann beispielsweise mittels EC-DH durch die Programminstruktionen 147 erfolgen.

Aufgrund eines entsprechenden Lesekommandos, welches das ID-Provider-Computersystem 136 über die Verbindung an den ID-Token 106 sendet, wird das ID-Token-Pseudonym aus dem geschützten Speicherbereich 125 ausgelesen und durch Ausführung der Programminstruktionen 132 verschlüsselt. Zusätzlich kann noch ein weiteres Attribut gelesen werden, wenn in dem Zertifikat 144 die hierfür erforderlichen Leserechte eingeräumt werden, wie z.B. das Geburtsdatum.

Das verschlüsselte ID-Token-Pseudonym und ggf. das verschlüsselte Attribut werden über die Verbindung an das ID-Provider-Computersystem 136 übertragen und dort durch Ausführung der Programminstruktionen 148 entschlüsselt. Dadurch erhält das ID-Provider-Computersystem 136 Kenntnis des aus dem ID-Token 106 ausgelesenen ID-Token-Pseudonyms und ggf. des Attributs.

### 4. Validitätsprüfung und Ableitung des Pseudonyms

Das ID-Provider-Computersystem 136 startet dann die Ausführung der Programminstruktionen 172, um die Validität des ausgelesenen ID-Token-Pseudonyms zu prüfen. Wenn das ID-Token-Pseudonym nicht auf der Sperrliste 161 beinhaltet ist, so wird nachfolgend die Ausführung der Programminstruktionen 174 gestartet, um ein Pseudonym des Nutzers zur Verwendung gegenüber dem ausgewählten Dienst-Computersystem aus dem ID-Token-Pseudonym abzuleiten.

### 5. Übertragung des Pseudonyms

Zur Übertragung des so abgeleiteten Pseudonyms und gegebenenfalls des ausgelesenen Attributs generiert das ID-Provider-Computersystem 136 zum Beispiel eine Antwort 178, welche das abgeleitete Pseudonym und gegebenenfalls das Attribut beinhaltet. Vorzugsweise ist die Antwort 178 mit Hilfe des privaten Schlüssels 142 und des Zertifikats 144 signiert. Vorzugsweise beinhaltet die Antwort 178 auch die Session-ID, um die Zuordnung der Antwort 178 zu dem Nutzer 102 durch das Dienst-Computersystem 150 zu vereinfachen.

Vorzugsweise wird die Antwort 178 über das Nutzer-Computersystem 100 an das Dienst-Computersystem 150 gesendet, wobei die Weiterleitung der Antwort 178 von dem Nutzer-Computersystem 100 an das Dienst-Computersystem 150 nur dann erfolgt, nachdem der Nutzer 102 eine entsprechende Bestätigung in das Nutzer-Computersystem 100 eingegeben hat. Dies ermöglicht es dem Nutzer, den Inhalt der Antwort 178 zur Kenntnis zu nehmen bevor er oder sie die Weiterleitung an das ausgewählte Dienst-Computersystem 150 autorisiert. Da das Zertifikat 144 nicht spezifisch für das ausgewählte Dienst-Computersystem ist, sondern einheitlich für sämtliche Dienst-Computersysteme verwendet wird, ist vorzugsweise in der Antwort 178 eine Information bezüglich des ausgewählten Dienst-Computersystems beinhaltet.

Nach dem Empfang der Antwort 178 kann das Dienst-Computersystem 150 dann die Validität der Signatur der Antwort 178 prüfen und dann das in der Antwort 178 beinhaltete abgeleitete Pseudonym zum Beispiel für einen Login des Nutzers 102 oder für dessen Wiedererkennung verwenden.

Nach einer Ausführungsform der Erfindung handelt es sich bei der Anforderung 176 um einen SAML-Request. Dementsprechend handelt es sich bei der Antwort 178 um eine SAML-Response.

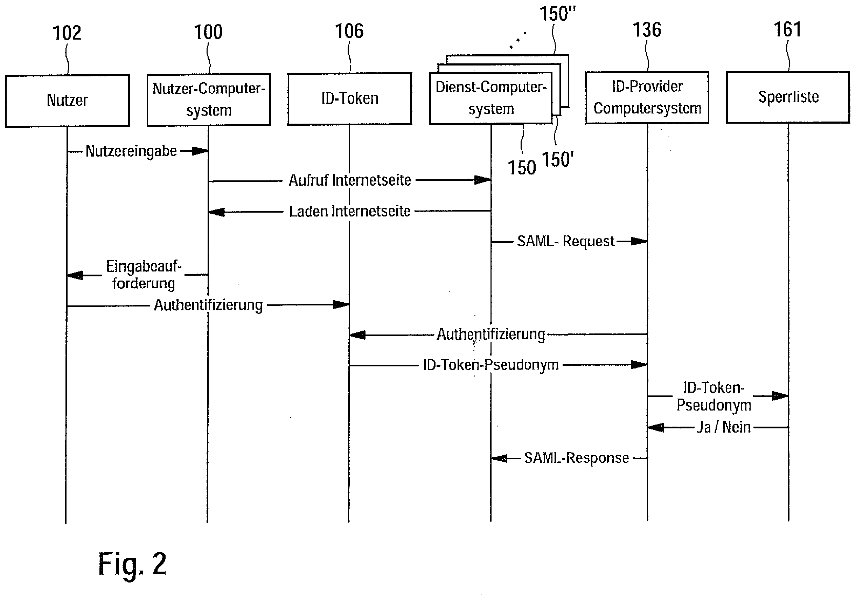

Die Figur 2 zeigt eine Ausführungsform eines erfindungsgemäßen Verfahrens anhand eines UML-Diagramms.

Durch eine Nutzereingabe eines Nutzers 102 in ein Nutzer-Computersystem 100, zum Beispiel durch Eingabe einer URL, wählt der Nutzer 102 ein bestimmtes Dienst-Computersystem aus, wie zum Beispiel das Dienst-Computersystem 150, von dem daraufhin auf das Nutzer-Computersystem 100 eine Internetseite geladen und auf einem Display des Nutzer-Computersystems 100 angezeigt wird.

Das Dienst-Computersystem 150 baut also mit dem Internetbrowser des Nutzer-Computersystems 100 eine Session auf, für welche das Dienst-Computersystem 150 eine Session-ID vergibt. Das Dienst-Computersystem 150 erzeugt aufgrund des Aufbaus der Session eine Anforderung, wie zum Beispiel in Form eines SAML-Requests für das Pseudonym des Nutzers, welches dieser gegenüber dem Dienst-Computersystem 150 verwendet.

Diese Anforderung kann die Session-ID sowie auch eine Kennung des Dienst-Computersystems 150 beinhalten, wie zum Beispiel die URL der von dem Nutzer 102 aufgerufenen Internetseite oder eine andere, das Dienst-Computersystem 150 identifizierende URL. Diese Anforderung, beispielsweise also in Form eines SAML-Request, sendet das Dienst-Computersystem 150 an das ID-Provider-Computersystem 136, zum Beispiel durch ein HTTP-Post als SOAP-Nachricht.

Der SAML-Request kann - wie in der Figur 2 dargestellt - unmittelbar von dem Dienst-Computersystem 150 an das ID-Provider-Computersystem 136 gesendet werden. Alternativ sendet das Dienst-Computersystem den SAML-Request an das Nutzer-Computersystem 100, von wo der SAML-Request durch einen sogenannten Redirect an das ID-Provider-Computersystem 136 weitergeleitet wird.

Beispielsweise beinhaltet die von dem Dienst-Computersystem 150 geladene Internetseite, welche von dem Internetbrowser des Nutzer-Computersystems 100 angezeigt wird, eine Eingabeaufforderung an den Nutzer 102, damit sich dieser gegenüber dem ID-Token 106 authentifiziert.

Der Nutzer 102 authentifiziert sich daraufhin gegenüber dem ID-Token 106, beispielsweise durch Eingabe seiner PIN.

Ferner startet das ID-Provider-Computersystem 136 eine sogenannte eID-Session, um das ID-Token-Pseudonym aus dem ID-Token 106 auszulesen. Hierzu muss sich das ID-Provider-Computersystem 136 zunächst gegenüber dem ID-Token 106 authentifizieren, und zwar mit Hilfe des Zertifikats 144 (vergleiche Figur 1). Nachdem die Authentifizierung erfolgreich durchgeführt worden ist, erzeugt der ID-Token 106 aufgrund des Empfangs des Zertifikats 144 ein ID-Token-Pseudonym durch Ableitung aus dem privaten Schlüssel 122 des ID-Tokens 106 sowie aus dem öffentlichen Schlüssel des Zertifikats 144. Das so von dem ID-Token 106 erzeugte ID-Token-Pseudonym kann dann von dem ID-Provider-Computersystem 136 über einen geschützten Kanal mit Ende-zu-Ende-Verschlüsselung aus dem ID-Token 106 ausgelesen werden.

Die Authentifizierung des Nutzers 102 bzw. des ID-Provider-Computersystems 136 gegenüber dem ID-Token 106 kann zum Beispiel mit Hilfe des Extended Access Control-Protokolls durchgeführt werden, so wie es von der Internationalen Luftfahrtbehörde (ICAO) spezifiziert ist. Um den Nutzer 102 über den Zweck des Lesezugriffs auf den ID-Token 106 zu informieren, kann von dem ID-Provider-Computersystem 136 eine entsprechende Information an das Nutzer-Computersystem 100 gesendet werden, und zwar beispielsweise in dem Feld "TransactionInfo" gemäß dem EAC-Protokoll. Das Feld TransactionInfo ist in BSI - Technical Guideline, eCard-API-Framework - Protocols, BSI TR-03112-7, Version: 1.1.1, 23.05.2011 Das von dem ID-Provider-Computersystem 136 an den ID-Token 106 gesendete Zertifikat wird für die Durchführung des EAC-Protokolls verwendet. Hierzu verifiziert der ID-Token 106 das Zertifikat und speichert den öffentlichen Schlüssel des Zertifikats zum Beispiel in seinen RAM. Daraufhin initiiert das ID-Provider-Computersystem 136 die Erzeugung des ID-Token-Pseudonyms, indem es eine entsprechende Anforderung an den ID-Token 106 zum Beispiel in Form einer sogenannten APDU sendet. Der ID-Token 106 erzeugt daraufhin aus dem öffentlichen Schlüssel des Zertifikats und seinem privaten Schlüssel das ID-Token-Pseudonym.

Nach Erhalt des ID-Token-Pseudonyms, das heißt beispielsweise des sogenannten RID, prüft das ID-Provider-Computersystem 136, ob das ID-Token-Pseudonym auf der Sperrliste 161 ist. Wenn das ID-Token-Pseudonym auf der Sperrliste 161 ist, so bricht der Vorgang an dieser Stelle mit einer Fehlermeldung ab.

Im gegenteiligen Fall leitet das ID-Provider-Computersystem 136 aus dem ID-Token-Pseudonym das Pseudonym des Nutzers zur Verwendung gegenüber dem ausgewählten Dienst-Computersystem 150 durch eine kryptografische Operation ab, die für das Dienst-Computersystem 150 spezifisch ist, beispielsweise durch Ausführung der Programminstruktionen 174. Mit anderen Worten führt die von dem ID-Provider-Computersystem 136 ausgeführte kryptografische Operation für jedes der Dienst-Computersysteme zu einem anderen abgeleiteten Pseudonym und zwar auf der Basis desselben ID-Token-Pseudonyms.

Das ID-Provider-Computersystem 136 erzeugt dann eine Antwort, wie zum Beispiel eine SAML-Response, die mittels SOAP/HTTP-Post an das Dienst-Computersystem 150 gesendet wird, und zwar entweder unmittelbar oder über das Nutzer-Computersystem 100. Das Dienst-Computersystem 150 verwendet dann das mit der SAML-Response empfangene abgeleitete Pseudonym zur Wiedererkennung oder zum Login des Nutzers 102.

Zusätzlich zu dem Lesen des ID-Token-Pseudonyms kann das Zertifikat 144 auch eine Leseberechtigung zum zusätzlichen Lesen eines Attributs des Nutzers 102 aus dem ID-Token 106 beinhalten, wie zum Beispiel dessen Geburtsdatum oder Geburtsjahr oder eine Information zu dessen Wohnort. Ein solches zusätzliches Attribut kann dann von dem ID-Provider-Computersystem 136 zusätzlich zu dem ID-Token-Pseudonym aus dem ID-Token 106 ausgelesen und über die SAML-Response an das Dienst-Computersystem 150 übertragen werden.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass das ihm von dem ID-Provider-Computersystem 136 mitgeteilten abgeleitete Pseudonym und ggf. das Attribut des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist der ID-Token 106 beispielsweise so ausgebildet, dass er nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

### Bezugszeichenliste

- 100: Nutzer-Computersystem
- 102: Nutzer
- 104: Schnittstelle
- 106: ID-Token
- 108: Schnittstelle
- 110: Prozessor
- 112: Programminstruktionen
- 114: Netzwerk-Schnittstelle
- 116: Netzwerk
- 118: elektronischer Speicher
- 120: geschützter Speicherbereich
- 122: geschützter Speicherbereich
- 124: geschützter Speicherbereich
- 125: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 147: Programminstruktionen
- 148: Programminstruktionen
- 149: Programm instruktionen
- 150: Dienst-Computersystem
- 150': Dienst-Computersystem
- 150": Dienst-Computersystem
- 152: Netzwerk-Schnittstelle
- 154: Prozessor
- 156: Programminstruktionen
- 158: lokale Verbindung
- 160: Datenbanksystem
- 161: Sperrliste
- 172: Programminstruktionen
- 174: Programminstruktionen
- 176: Anforderung
- 178: Antwort

## Patentansprüche

1. Verfahren zur Erzeugung eines Pseudonyms mit Hilfe eines ID-Tokens (106) für einen Nutzer (102), wobei der ID-Token dem Nutzer zugeordnet ist und der ID-Token einen geschützten Speicherbereich (122) zur Speicherung zumindest eines privaten Schlüssels eines dem ID-Token zugeordneten ersten asymmetrischen kryptografischen Schlüsselpaars aufweist, und wobei das Pseudonym des Nutzers einem Dienst-Computersystem aus einer Menge von Dienst-Computersystemen (150, 150', 150",...) zugeordnet ist, mit folgenden Schritten:
- Aufruf einer Internetseite eines von dem Nutzer ausgewählten der Dienst-Computersysteme mit einem Internetbrowser (112) eines Nutzer-Computersystems (100) über ein Netzwerk (116),
- Erzeugung einer Anforderung (176) durch das ausgewählte Dienst-Computersystem für das Pseudonyms des Nutzers,
- Übertragung der Anforderung von dem Dienst-Computersystem an ein ID-Provider-Computersystem (136) über das Netzwerk,
- Authentifizierung des Nutzers gegenüber dem ID-Token,
- Authentifizierung des ID-Provider-Computersystems gegenüber dem ID-Token über das Netzwerk mit einem Zertifikat (144), welches einen öffentlichen Schlüssel eines zweiten asymmetrischen kryptografischen Schlüsselpaars beinhaltet, das dem ID-Provider-Computersystem zugeordnet ist, und in dem eine Leseberechtigung des ID-Provider-Computersystems für einen Lesezugriff zum Lesen eines ID-Token-Pseudonyms aus dem ID-Token definiert ist,
- Erzeugung des ID-Token-Pseudonyms durch den ID-Token durch kryptografische Ableitung des ID-Token-Pseudonyms aus dem privaten Schlüssel und dem öffentlichen Schlüssel,
- temporäre Speicherung des ID-Token-Pseudonyms in dem ID-Token,
- nach erfolgreicher Authentifizierung des Nutzers und des ID-Provider-Computersystems gegenüber dem ID-Token, Lesezugriff des ID-Provider-Computersystems auf das in dem ID-Token gespeicherte ID-Token-Pseudonym über das Netzwerk,
- Übertragung des ID-Token-Pseudonyms von dem ID-Token an das ID-Provider-Computersystem mit Ende-zu-Ende-Verschlüsselung über das Netzwerk aufgrund des Lesezugriffs,
- Prüfung der Validität des ID-Token-Pseudonyms durch das ID-Provider-Computersystem,
- Ableitung des dem ausgewählten Dienst-Computersystem zugeordneten Pseudonyms des Nutzers aus dem ID-Token-Pseudonym des Nutzers mittels einer für das ausgewählte Dienst-Computersystem spezifischen kryptografischen Funktion durch das ID-Provider-Computersystem,
- Signierung des abgeleiteten Pseudonyms durch das ID-Provider-Computersystem,
- Übertragung des signierten Pseudonyms von dem ID-Provider-Computersystem an das ausgewählte Dienst-Computersystem über das Netzwerk, wobei jedem der Dienst-Computersysteme eine Einwegfunktion zugeordnet ist, sodass das ID-Provider-Computersystem für die Ableitung des Pseudonyms auf die dem ausgewählten Dienst-Computersystem zugeordnete Einwegfunktion zugreift, um mit Hilfe dieser Einwegfunktion aus dem ID-Token-Pseudonym das Pseudonym abzuleiten,
wobei das Pseudonym durch Berechnung eines Hash-based Message Authentication Code (HMAC) abgeleitet wird, wobei das ID-Token-Pseudonym als geheimer Schlüssel zur Erzeugung des HMAC einer Kennung des ausgewählten Dienst-Computersystems verwendet wird, wobei es sich bei der Kennung um die URL der von dem Nutzer aufgerufenen Internetseite handelt.

2. Verfahren nach einem der vorhergehenden Ansprüche, wobei es sich bei der Anforderung um einen SAML-Request handelt, der einen Identifikator für die aufgrund des Aufrufs der Internetseite aufgebaute Session beinhaltet, wobei die Signierung des Pseudonyms durch das ID-Provider-Computersystem durch Erzeugung einer SAML-Response erfolgt, welche das abgeleitete Pseudonym und den Identifikator beinhaltet, wobei das ausgewählte Dienst-Computersystem die von dem ID-Provider-Computersystem empfangene SAML-Response anhand des Identifikators der Session zuordnet.

3. Verfahren nach einem der vorhergehenden Ansprüche, wobei der Nutzer auf dem ausgewählten Dienst-Computersystem mit Hilfe des abgeleiteten Pseudonyms eingeloggt oder wiedererkannt wird.

4. Verfahren nach einem der vorhergehenden Ansprüche, wobei der ID-Token als USB-Stick oder als Dokument ausgebildet ist, insbesondere als Wert- oder Sicherheitsdokument, insbesondere papierbasiert und/oder kunststoffbasiert, wie zum Beispiel als Ausweisdokument, insbesondere Reisepass, Personalausweis, Visum, Führerschein, Fahrzeugschein, Fahrzeugbrief, Firmenausweis, elektronische Gesundheitskarte oder anderes ID-Dokument, als Chipkarte, Zahlungsmittel, insbesondere Bankkarte, Kreditkarte oder Banknote, Frachtbrief oder sonstiger Berechtigungsnachweis.

5. Datenverarbeitungssystem mit einem ID-Provider-Computersystem (136), wobei das ID-Provider-Computersystem Folgendes aufweist:
- Mittel (138) zum Empfang einer Anforderung von einem ausgewählten Dienst-Computersystem einer Menge von Dienst-Computersystemen über ein Netzwerk (116),
- Mittel (146) zur Authentifizierung des ID-Provider-Computersystems gegenüber einem ID-Token eines Nutzers über das Netzwerk mit einem Zertifikat (144), welches einen öffentlichen Schlüssel eines zweiten asymmetrischen kryptografischen Schlüsselpaars beinhaltet und in dem eine Leseberechtigung des ID-Provider-Computersystems für einen Lesezugriff zum Lesen eines ID-Token-Pseudonyms definiert ist, wobei die Mittel zur Authentifizierung zur Übertragung des Zertifikats an den ID-Token über das Netzwerk ausgebildet sind, um die Erzeugung eines ID-Token-Pseudonyms durch den ID-Token mittels einer kryptografische Ableitung des ID-Token-Pseudonyms aus einem privaten Schlüssel des ID-Tokens und dem öffentlichen Schlüssel des Zertifikats zu ermöglichen,
- Mittel (138, 148) zur Durchführung eines Lesezugriffs auf das ID-Token-Pseudonym des ID-Tokens über das Netzwerk mit Ende-zu-Ende-Verschlüsselung,
- Mittel (172) zur Prüfung der Validität des ID-Token-Pseudonyms,
- Mittel (174) zur Ableitung eines dem ausgewählten Dienst-Computersystem zugeordneten Pseudonyms des Nutzers aus dem ID-Token-Pseudonym des Nutzers mittels einer für das ausgewählte Dienst-Computersystem spezifischen kryptografischen Funktion,
- Mittel (144, 145) zur Signierung des abgeleiteten Pseudonyms durch das ID-Provider-Computersystem,
- Mittel (138) zur Übertragung des signierten Pseudonyms von dem ID-Provider-Computersystem an das ausgewählte Dienst-Computersystem über das Netzwerk,
wobei jedem der Dienst-Computersysteme eine Einwegfunktion zugeordnet ist, und die Mittel zur Ableitung so ausgebildet sind, dass für die Ableitung des Pseudonyms auf die dem ausgewählten Dienst-Computersystem zugeordnete Einwegfunktion zugegriffen wird, um mit Hilfe dieser Einwegfunktion aus dem ID-Token-Pseudonym das Pseudonym abzuleiten,
wobei die Mittel zur Ableitung so ausgebildet sind, dass das Pseudonym durch Berechnung eines Hash-based Message Authentication Code (HMAC) abgeleitet wird, wobei das ID-Token-Pseudonym als geheimer Schlüssel zur Erzeugung des HMAC einer Kennung des ausgewählten Dienst-Computersystems verwendet wird, wobei es sich bei der Kennung um die URL der von dem Nutzer aufgerufenen Internetseite handelt.

6. Datenverarbeitungssystem nach Anspruch 5, wobei es sich bei der Anforderung um einen SAML-Request handelt, der einen Identifikator für die aufgrund des Aufrufs der Internetseite aufgebaute Session beinhaltet, wobei die Mittel zur Signierung des Pseudonyms zur Erzeugung einer SAML-Response, welche das abgeleitete Pseudonym und den Identifikator beinhaltet, ausgebildet sind, um eine Zuordnung der SAML-Response zu der Session anhand des Identifikators durch das ausgewählte Dienst-Computersystem zu ermöglichen.

7. Datenverarbeitungssystem nach einem der Ansprüche 5 oder 6, mit dem ID-Token und/oder den Dienst-Computersystemen und/oder einem Nutzer-Computersystem, über welches der Lesezugriff des ID-Provider-Computersystem auf den ID-Token erfolgen kann.

8. Computerprogrammprodukt, insbesondere digitales Speichermedium, mit ausführbaren Instruktionen zur Durchführung eines Verfahrens nach einem der vorhergehenden Ansprüche 1 bis 4.

## Claims

1. A method for generating a pseudonym using an ID token (106) for a user (102), the ID token being assigned to the user, and the ID token including a protected memory area (122) for storing at least one private key of a first asymmetric cryptographic key pair assigned to the ID token, and the pseudonym of the user being assigned to a service computer system from a set of service computer systems (150, 150', 150",...), comprising the following steps:
- opening a website of one of the service computer systems selected by the user, using a web browser (112) of a user computer system (100) via a network (116);
- generating a request (176), by the selected service computer system, for the pseudonym of the user;
- transmitting the request from the service computer system to an ID provider computer system (136) via the network;
- authenticating the user with respect to the ID token;
- authenticating the ID provider computer system with respect to the ID token via the network using a certificate (144), which includes a public key of a second asymmetric cryptographic key pair assigned to the ID provider computer and in which a read authorization of the ID provider computer system for a read access for reading an ID token pseudonym from the ID token is defined;
- generating the ID token pseudonym, by the ID token, by cryptographic derivation of the ID token pseudonym from the private key and the public key;
- temporarily storing the ID token pseudonym in the ID token;
- after successful authentication of the user and of the ID provider computer system with respect to the ID token, providing read access for the ID provider computer system to the ID token pseudonym stored in the ID token via the network;
- transmitting the ID token pseudonym from the ID token to the ID provider computer system, using end-to-end encryption, via the network based on the read access;
- checking the validity of the ID token pseudonym, by the ID provider computer system;
- deriving, by the ID provider computer system, the pseudonym of the user assigned to the selected service computer system from the ID token pseudonym of the user, using a cryptographic function specific to the selected service computer system;
- signing the derived pseudonym, by the ID provider computer system;
- transmitting the signed pseudonym from the ID provider computer system to the selected service computer system via the network, a one-way function being assigned to each of the service computer systems so that the ID provider computer system, for the derivation of the pseudonym, accesses the one-way function assigned to the selected service computer so as to derive the pseudonym from the ID token pseudonym using this one-way function,
wherein the pseudonym is derived by the calculation of a hash-based message authentication code (HMAC), the ID token pseudonym is used as a secret key for generating the HMAC of an identifier of the selected service computer system, and the identifier is the URL of the website opened by the user.

2. The method according to any one of the preceding claims, wherein the request is a SAML request, which includes an identifier for the session established based on the opening of the website, the signing of the pseudonym by the ID provider computer system takes place by the generation of a SAML response which includes the derived pseudonym and the identifier, and the selected service computer system assigns the SAML response received from the ID provider computer system based on the identifier of the session.

3. The method according to any one of the preceding claims, wherein the user is logged into or recognized on the selected service computer system using the derived pseudonym.

4. The method according to any one of the preceding claims, wherein the ID token is designed as a USB stick or as a document, in particular as a value or security document, in particular paper-based and/or plastic-based, for example as an identification document, in particular a passport, an identification card, a visa, a driver's license, a vehicle registration, a vehicle title, a company ID card, an electronic health insurance card or other ID document, as a chip card, a payment instrument, in particular a bank card, a credit card or a bank note, a bill of lading or other proof of authorization.

5. A data processing system comprising an ID provider computer system (136), the ID provider computer system comprising the following:
- means (138) for receiving a request from a selected service computer system of a set of service computer systems via a network (116);
- means (146) for authenticating the ID provider computer system with respect to an ID token of a user via the network using a certificate (144), which includes a public key of a second asymmetric cryptographic key pair and in which a read authorization of the ID provider computer system for a read access for reading an ID token pseudonym is defined, the means for authentication being designed to transmit the certificate to the ID token via the network so as to enable the generation of an ID token pseudonym by the ID token, using a cryptographic derivation of the ID token pseudonym, from a private key of the ID token and the public key of the certificate;
- means (138, 148) for carrying out a read access to the ID token pseudonym of the ID token via the network using end-to-end encryption;
- means (172) for checking the validity of the ID token pseudonym;
- means (174) for deriving a pseudonym of the user assigned to the selected service computer system from the ID token pseudonym of the user, using a cryptographic function specific to the selected service computer system;
- means (144, 145) for signing the derived pseudonym, by the ID provider computer system;
- means (138) for transmitting the signed pseudonym from the ID provider computer system to the selected service computer system via the network,
a one-way function being assigned to each of the service computer systems, and the means for derivation being designed so as to access the one-way function assigned to the selected service computer for deriving the pseudonym, so as to derive the pseudonym from the ID token pseudonym using this one-way function,
wherein the means for derivation are designed so as to derive the pseudonym by the calculation of a hash-based message authentication code (HMAC), the ID token pseudonym is used as a secret key for generating the HMAC of an identifier of the selected service computer system, and the identifier is the URL of the website opened by the user.

6. The data processing system according to claim 5, wherein the request is a SAML request, which includes an identifier for the session established based on the opening of the website, the means for signing the pseudonym being designed to generate a SAML response which includes the derived pseudonym and the identifier, so as to enable an assignment of the SAML response to the session based on the identifier of the session by the selected service computer system.

7. The data processing system according to any one of claims 5 or 6, comprising the ID token and/or the service computer system and/or a user computer system, via which the read access of the ID provider computer to the ID token can take place.

8. A computer program product, in particular a digital storage medium, comprising executable instructions for carrying out a method according to any one of the preceding claims 1 to 4.

## Revendications

1. Procédé de création d'un pseudonyme à l'aide d'un jeton d'identification (106) pour un utilisateur (102), où le jeton d'identification est associé à l'utilisateur et le jeton d'identification présente une zone de mémoire sécurisée (122) pour le stockage d'au moins une clé privée d'une première paire de clés cryptographiques asymétrique associée au jeton d'identification, et où le pseudonyme de l'utilisateur est associé à un système informatique de service parmi une quantité de systèmes informatiques de service (150, 150', 150", ...), avec les étapes suivantes :
- l'appel d'une page internet d'un des systèmes informatiques de service choisis par l'utilisateur avec un navigateur internet (112) d'un système informatique d'utilisateur (100) par le biais d'un réseau (116),
- la création d'une requête (176) par le système informatique d'utilisateur choisi pour le pseudonyme de l'utilisateur,
- la transmission de la requête du système informatique de service à un système informatique de fournisseur d'identification (136) par le biais du réseau,
- l'authentification de l'utilisateur vis-à-vis du jeton d'identification,
- l'authentification du système informatique de fournisseur d'identification vis-à-vis du jeton d'identification par le biais du réseau avec un certificat (144), lequel contient une clé publique d'une deuxième paire de clés cryptographiques asymétrique qui est associée au système informatique de fournisseur d'identification, et dans laquelle est définie une autorisation de lecture du système informatique de fournisseur d'identification pour un accès en lecture pour la lecture d'un pseudonyme de jeton d'identification à partir du jeton d'identification,
- la création du pseudonyme de jeton d'identification par le jeton d'identification par une dérivation cryptographique du pseudonyme de jeton d'identification à partir de la clé privée et de la clé publique,
- le stockage temporaire du pseudonyme de jeton d'identification dans le jeton d'identification,
- après l'authentification réussie de l'utilisateur et du système informatique de fournisseur d'identification vis-à-vis du jeton d'identification, l'accès en lecture du système informatique de fournisseur d'identification pour le pseudonyme de jeton d'identification stocké dans le jeton d'identification par le biais du réseau,
- la transmission du pseudonyme de jeton d'identification du jeton d'identification au système informatique de fournisseur d'identification avec un cryptage de bout en bout par le biais du réseau en raison de l'accès en lecture,
- la vérification de la validité du pseudonyme du jeton d'identification par le système informatique de fournisseur d'identification,
- la dérivation du pseudonyme de l'utilisateur associé au système informatique de service choisi à partir du pseudonyme de jeton d'identification de l'utilisateur au moyen d'une fonction cryptographique spécifique pour le système informatique de service choisi par le système informatique de fournisseur d'identification,
- la signature du pseudonyme dérivé par le système informatique de fournisseur d'identification,
- la transmission du pseudonyme signé du système informatique de fournisseur d'identification au système informatique de service choisi par le biais du réseau, où une fonction unidirectionnelle est associée à chacun des systèmes informatiques de service, de sorte que le système informatique de fournisseur d'identification a accès à la fonction unidirectionnelle associée au système informatique de service choisi pour la dérivation du pseudonyme afin de dériver le pseudonyme à partir du pseudonyme de jeton d'identification à l'aide de cette fonction unidirectionnelle,
où le pseudonyme est dérivé par le calcul d'un code d'authentification de message basé sur un hachage (HMAC), où le pseudonyme de jeton d'identification est employé en tant que clé privée pour la création du HMAC d'une identification du système informatique de service choisi, où, dans le cas de l'identification, il s'agit de l'URL de la page internet appelée par l'utilisateur.

2. Procédé selon l'une des revendications précédentes, dans lequel, dans le cas de la requête, il s'agit d'une requête en langage SAML, qui contient un identificateur pour la session établie en raison de l'appel de la page internet, où la signature du pseudonyme par le système informatique de fournisseur d'identification a lieu par la génération d'une réponse en SAML, laquelle contient le pseudonyme dérivé et l'identificateur, où le système informatique de service choisi associe la réponse en SAML reçue du système informatique de fournisseur d'identification à l'aide de l'identificateur de la session.

3. Procédé selon l'une des revendications précédentes, dans lequel l'utilisateur est connecté ou reconnu sur le système informatique de service choisi à l'aide du pseudonyme dérivé.

4. Procédé selon l'une des revendications précédentes, dans lequel le jeton d'identification est conçu sous forme d'une clé USB ou sous forme d'un document, notamment, sous forme d'un document de valeur ou de sécurité, en particulier basé sur du papier et/ou basé sur une matière synthétique, comme, par exemple, un document d'identité, notamment un passeport, une carte d'identité, un visa, un permis de conduire, une carte d'immatriculation de véhicule, un document d'enregistrement de véhicule, une carte d'entreprise, une carte de santé électronique ou un autre document d'identité, sous forme d'une carte à puce, d'un moyen de paiement, notamment une carte bancaire, une carte de crédit ou un billet de banque, d'un connaissement ou d'une autre attestation d'autorisation.

5. Système de traitement de données avec un système informatique de fournisseur d'identification (136), où le système informatique de fournisseur d'identification présente ce qui suit :
- des moyens (138) de réception d'une requête d'un système informatique de service choisi parmi une quantité de systèmes informatiques de service par le biais d'un réseau (116),
- des moyens (146) d'authentification du système informatique de fournisseur d'identification vis-à-vis d'un jeton d'identification d'un utilisateur par le biais du réseau avec un certificat (144), lequel contient une clé publique d'une deuxième paire de clés cryptographiques asymétrique et dans laquelle est définie une autorisation de lecture du système informatique de fournisseur d'identification pour un accès en lecture pour la lecture d'un pseudonyme de jeton d'identification, où les moyens d'authentification sont conçus pour la transmission du certificat au jeton d'identification par le biais du réseau afin de permettre la création d'un pseudonyme de jeton d'identification par le jeton d'identification au moyen d'une dérivation cryptographique du pseudonyme de jeton d'identification à partir d'une clé privée du jeton d'identification et de la clé publique du certificat,
- des moyens (138, 148) d'exécution d'un accès en lecture pour le pseudonyme de jeton d'identification du jeton d'identification par le biais du réseau avec un cryptage de bout en bout,
- des moyens (172) pour la vérification de la validité du pseudonyme de jeton d'identification,
- des moyens (174) de dérivation d'un pseudonyme de l'utilisateur associé au système informatique de service choisi à partir du pseudonyme de jeton d'identification au moyen d'une fonction cryptographique spécifique pour le système informatique de service choisi,
- des moyens (144, 145) de signature du pseudonyme dérivé par le système informatique de fournisseur d'identification,
- des moyens (138) de transmission du pseudonyme signé du système informatique de fournisseur d'identification au système informatique de service choisi par le biais du réseau,
où une fonction unidirectionnelle est associée à chacun des systèmes informatiques de service, et les moyens de dérivation sont conçus de telle sorte que, pour la dérivation du pseudonyme, il est fait appel à la fonction unidirectionnelle associée au système informatique de service choisi afin de dériver le pseudonyme à partir du pseudonyme de jeton d'identification à l'aide de cette fonction unidirectionnelle,
où les moyens de dérivation sont conçus de telle manière que le pseudonyme est dérivé par le calcul d'un code d'authentification de message basé sur un hachage (HMAC), où le pseudonyme de jeton d'identification est employé en tant que clé privée pour la création du HMAC d'une identification du système informatique de service choisi, où, dans le cas de l'identification, il s'agit de l'URL de la page internet appelée par l'utilisateur.

6. Système de traitement de données selon la revendication 5, dans lequel, dans le cas de la requête, il s'agit d'une requête en SAML, qui contient un identificateur pour la session établie en raison de l'appel de la page internet, où les moyens de signature du pseudonyme pour la génération d'une réponse en SAML, laquelle contient le pseudonyme dérivé et l'identificateur, sont conçus pour permettre une association de la réponse en SAML pour la session à l'aide de l'identificateur par le système informatique de service choisi.

7. Système de traitement de données selon l'une des revendications 5 ou 6, doté du jeton d'identification et/ou des systèmes informatiques de service et/ou d'un système informatique d'utilisateur par lequel l'accès en lecture du système informatique de fournisseur d'identification pour le jeton d'identification peut avoir lieu.

8. Produit-programme informatique, notamment, support de stockage numérique, avec des instructions exécutables pour la réalisation d'un procédé selon l'une des revendications précédentes 1 à 4.
